# EUROPEAN PATENT SPECIFICATION

(11) **EP 3 638 049 B1**
(45) Date of publication and mention of the grant of the patent: **30.12.2020**
(21) Application number: 18730787.1
(22) Date of filing: 14.06.2018
(51) Int. Cl.: A23G 9/26, A23G 9/50, B65D 85/78, B32B 15/12, B32B 27/10, B32B 27/32, B32B 27/36, B65D 75/46

(54) **FROZEN CONFECTION PRODUCT PACKAGING**
VERPACKUNG VON GEFRORENEN KONFEKTPRODUKTEN
EMBALLAGE DE PRODUIT DE CONFISERIE CONGELÉ

(30) Priority: 15.06.2017 EP 17176213
(43) Date of publication of application: 22.04.2020
(73) Proprietor: Unilever PLC, London, EC4Y 0DY (GB); Unilever N.V., 3013 AL Rotterdam (NL)
(72) Inventor: ORDEGNO, Monica, Bedford Bedfordshire MK44 1LQ (GB)
(74) Representative: Turner, Felicity Margaret Mary
(86) International application number: PCT/EP2018/065833
(87) International publication number: WO 2018/229204

(56) References cited:
- EP-A1- 0 887 026
- EP-A1- 2 589 547
- WO-A1-84/00734
- WO-A1-2016/184818
- WO-A2-2011/004156
- US-A- 2 999 758
- US-A1- 2012 138 670
- US-B2- 8 043 674

## Description

### Field of the invention

A frozen confection product comprising a frozen confection and a flexible wrapper, wherein the inner material of the flexible wrapper has a high water vapour transmission rate (WVTR) and the subsequent material has a low water vapour transmission rate (WVTR). The use of the flexible wrapper for reduction of frost present on the surface of the frozen confection, in particular, upon storage.

### Background of the invention

Frozen confections are typically required to be storage stable for up to 24 months at approximately -18 °C to achieve satisfactory quality standards. Atypical problem that reduces the storage stability and consequently shelf-life of frozen confections is moisture accumulation on the surface of the frozen confection, typically called frost. Frost may form on the surface of frozen confections through accumulation and crystallisation of moisture on the surface, this moisture may originate from the atmosphere surrounding the frozen confection or from moisture migration from the frozen confection itself. Several solutions have been provided in order to reduce the formation of frost on the surface of frozen confections or chilled food products.

In order to reduce or prevent frost formation resulting from water migration through the flexible packaging material itself, a flexible wrapper material with a low water vapour transmission rate (WVTR), also known as moisture vapour transmission rate (MVTR), such as a monolayer polypropylene film, is typically used as a flexible wrapper packaging material for frozen confections. Examples of such monolayer polypropylene film wrappers include the current Twister® and Solero ® frozen confection wrappers.

Additionally, or alternatively, an inert gas such as nitrogen, or a mix of nitrogen and carbon dioxide, may be introduced into the packaging prior to sealing. The introduction of an inert gas or mix of gasses reduces and/or replaces any moisture present within the atmosphere during the packaging process; consequently, the production of frost on the surface of the frozen food is reduced further. Such a process is exemplified in EP 1 449 790 A1. This solution appears to solve the problem of frost forming on the frozen confection within sealed packaging that contains moisture within the sealed atmosphere of the packaging.

An alternative solution to reduce frost forming on the surface of frozen confections is to reduce the dehydration of the frozen confection. Dehydration of the frozen confection and the subsequent formation of frost on the surface of the confection occurs through migration of water contained in the frozen confection to the surface of the confection.

US 2,999,758 discloses an ice cream carton comprising a sheet of unwaxed paperboard laminated to a barrier material. The paperboard lines the inner surface of the finished carton and demonstrates improved storage stability of the ice cream. The improved storage stability arises from the decreased dehydration of the high moisture content frozen confection compared to the same product stored in a carton with a waxed paperboard inner surface. It was observed that the unwaxed paperboard cartons demonstrated limited absorption of moisture from the ice cream and a reduction in the amount of food clinging to the surfaces of the paperboard. It should be noted that the paperboard imparts sufficient strength to make the cartons self-supporting and has a weight of between 60-250 pounds per ream

WO2016/184818 discloses process for producing a product, amongst others a frozen food or ice cream, enclosed in a re-closable flexible flow-wrap pack, the flexible flow-wrap wrapper comprising an inner material and at least one subsequent material, the inner and the subsequent materials being selected from a list of materials that are suitable as sheeting materials, said list comprising paper, woven fabric, non-woven fabric, ceramic sheet, metallic fibre sheet, metallised sheet or film, metallic foil, metallic plate, cellulosic films (e.g. microbial or regenerated cellulose film), thermoplastic films, polymeric films (for example films comprising: polyolefins [e.g. polypropylene and/or polyethylene] polyurethanes, polyvinyl halides (e.g. PVC), polyesters (e.g. polyethylene terephthalate - PET).

There remains a need to provide a flexible wrapper suitable for the storage of frozen confections that reduces the amount of frost forming on the surface of the frozen confection, in particular, high moisture content frozen confections. It is an advantage if the flexible wrapper is suitable for individual frozen confection servings, such as stick-based products, and that the manufacture and use of the wrapper is commercially feasible.

### Summary of the invention

A frozen confection product comprising a frozen confection and a flexible wrapper, wherein the inner material of the flexible wrapper has a high water vapour transmission rate (WVTR) and the subsequent material or materials have a low water vapour transmission rate (WVTR). The use of the flexible wrapper for reduction of frost present on the surface of the frozen confection, in particular, upon storage. The present invention demonstrates that a significant reduction in the amount of frost on the surface of a frozen confection has been observed when the frozen confection is stored in a flexible wrapper comprising an inner and one or more subsequent materials. The maximum amount of frost observed upon storage, at both constant and variable temperatures, was 16% of the total frost present. In comparison, frozen confections stored under the same conditions in a polymer only flexible wrapper were observed to have up to 83 % of the total frost present on the surface of the frozen confection. Such a significant reduction frost present on the surface of the frozen confection significantly improves the storage stability (shelf life) and quality of the frozen confection.

### Detailed description of the invention

A frozen confection product is disclosed comprising a frozen confection and a flexible flow-wrap wrapper, wherein the flexible flow-wrap wrapper comprises an inner material and one or more subsequent materials, wherein the inner material has a water vapour transmission rate (WVTR) of at least 300 gm⁻² per 24 hr and a subsequent material with a water vapour transmission rate of at most 300 gm⁻² per 24 hr, the frozen confection is adjacent to the inner material and the flexible flow-wrap wrapper is closed or sealed.

Typical conditions of measuring WVTR include 38 °C and 90% humidity, according to test method: ASTM 1249-13. ASTM is an international standards developing organization and can be accessed at www.astm.org.

A flexible wrapper comprising an inner material and one or more subsequent materials, wherein the inner material has a water vapour transmission rate of at least 300 gm⁻² per 24 hr and is bonded by lamination, optionally with an adhesive, to a subsequent material, wherein the subsequent material has a water vapour transmission rate of at most 300 gm⁻² per 24 hr. An example of a suitable lamination process is described in WO2011/004156, page 12 lines 8-15.

A flexible wrapper comprising an inner material and one or more subsequent materials, wherein the inner material has a water vapour transmission rate of at least 300 gm⁻² per 24 hr and is coated with a subsequent material, wherein the subsequent material has a water vapour transmission rate of at most 300 gm⁻² per 24 hr. An example of a suitable coating process is described in US 3,003,884, col. 3, lines 55-58.

The frozen confection product may further comprise a gaseous substance. Gaseous substance means a composition comprising one or more gasses; i.e. a composition in the gas phase. The gas is selected from the group consisting of: air, one or more inert gases and mixtures thereof. Inert gases may include for example: nitrogen or carbon dioxide.

Inner material means the material on the inside of the flexible wrapper, i.e. the material comprising the surface of the flexible wrapper that is adjacent to the frozen confection.

Subsequent material means the material of the flexible wrapper that is bonded to or coated on to the inner material. Alternatively, there may be several subsequent materials present in the flexible wrapper, in such an embodiment, each additional subsequent material is bonded to or coated on to the surface of an adjacent, subsequent material.

Outer material means the material of the flexible wrapper that is the subsequent material bonded to or coated onto either an inner material or one or more adjacent subsequent materials and is exposed to the external atmosphere; i.e. the material comprising the external surface of the wrapper.

Inner materials; i.e. materials with a high water vapour transmission rate (WVTR), means materials with a WVTR of at least 300 gm⁻² per 24 hr, preferably at least 400 gm⁻² per 24 hr, from 300 to 10,000 gm⁻² per 24 hr, from 1,300 to 1,600 gm⁻² per 24 hr. Examples of materials with a high WVTR include cellulose materials. Examples of materials with a high water vapour transmission rate include cellulose materials selected from the group consisting of paper. Examples of paper include 'Emelcar 1-5' and 'Carlux OB' supplied by Cham Paper Group (http://www.cham-group.com): Food, Non-Food, Pharma/Flexible Packaging Papers and Gerbier HD papers from Munksjo (http://www.munksjo.com).

The amount of cellulose material present as the inner material can be defined by its weight per square meter. The amount of cellulose present is in an amount of from 35 gm⁻² to 120 gm⁻², preferably from 40 to 80 gm⁻², more preferably from 60 to 70 gm⁻².

Subsequent materials; i.e. materials with a low water vapour transmission rate (WVTR), means materials with a WVTR of at most 300 gm⁻² per 24 hr; from 0 to 300 gm⁻² per 24 hr; from 0.1 gm⁻² to 100 gm⁻² per 24 hr; from 0.2 gm⁻² to 30 gm⁻² per 24 hr; from 0.3 to 20 gm⁻² per 24 hr; from 5 gm⁻² to 15 gm⁻² per; and from 5 to 10 gm⁻² per 24 hr. Examples of materials with a low water vapour transmission rate include materials selected from one or more of the group consisting of polymer material; metals; and coating material.

Polymer material is selected from the group consisting of polypropylene (PP), polyethylene (PE), polyethylene terephthalate (PET). The polymer material may be uni- or bi-axially oriented, for example bi-axially oriented polypropylene, typically abbreviated to the name BOPP.

The polymer material may comprise a treated surface on one surface of the polymer material, and a heat sealable layer on the opposing surface of the polymer material [see www.jindal.com for descriptions of examples provided below]. The polymer materials with a treated surface and a heat sealable layer may be used in the preparation of the flexible wrapper by a lamination process with the inner material. Examples include polypropylene polymer materials for use in laminating processes, i.e. BOPP films, such as the Bicor range of materials supplied by Jindal (www.jindalfilms.com); for example: 15MB400 and OPPalyte™ 33ICE. The treated surface of the polymer material may be a metal and may be in the form of a metallized polymer material, for example, the polymer material may be a metallized film. Examples of metalized films include: 'MettalyteTM', i.e. metallized OPP, PP or PE film and Metallyte BOPP 15MM488 and 20MM480 available from Jindal (www.jindalfilms.com). The metal comprises aluminium or the metal is aluminium. The aluminium may be coated onto the polymer by a physical vapour deposition process.

The polymer material for use in lamination to the inner material has a thickness of at least 8 µm and at the most 40 µm at least 10 µm and at the most 40 µm; preferably between about 15 µm and about 33 µm; preferably between 15 µm and 33 µm.

A flexible wrapper comprising an inner material with a high water vapour transmission rate (WVTR) and a subsequent material with a low water vapour transmission rate (WVTR) wherein the inner and subsequent materials that are bonded together may be prepared by either adhesive lamination or extrusion lamination. Examples of a flexible wrapper prepared by lamination include: laminated polypropylene-paper (PP paper) and laminated polyethylene-paper (PE paper).

In an embodiment the flexible wrapper is prepared by adhesive lamination and comprises a BOPP-paper wrapper comprising of BOPP (20 µm), adhesive (3 gsm) and paper (60 gm⁻²).

In another embodiment, the flexible wrapper is prepared by extrusion lamination and comprises a BOPP-paper wrapper comprising of PP (20 µm), PP (15 gm⁻²) and paper (60 gm⁻²).

The flexible wrapper may also be prepared by coating an inner material with a polymer material or coating material.

Examples of resins that may be used to form a polymer material that is a subsequent material bonded to an inner material prepared by an extrusion coating process include DOW™ LDPE 722 - TDS (www.dow.com) and Borealis Daploy™ WF420HMS (www.borealisgroup.com).

The polymer material is present in an amount from 10 gm⁻² to 40 gm⁻², more preferably from 15 gm⁻² to 20 gm⁻².

The coating material is commonly known as a 'high barrier moisture resistant coating material'. Such a coating material that may be used to form a subsequent material bonded to the inner material include; for example: Aquaseal X2258, available from Paramelt (www.paramelt.com); and Joncryl DFC3030 available from BASF (www.basf.com).

The coating material is present from 5 gm⁻² to 40 gm⁻², more preferably from 10 gm⁻² to 20 gm⁻².

A subsequent material may also be the coating material of a coated inner material; e.g. the coating of a coated cellulose material. The coating material is selected from the group consisting of metal, lacquer and clay. Examples of coated inner material include: metalized paper, lacquer coated paper and clay coated paper.

Where the coating material is metal, the metal is present from 0.1 gm⁻² to 10 gm⁻², preferably from 1 gm⁻² to 8 gm⁻².

Where the coating material is lacquer, the metal is present from 30 gm⁻² to 55 gm⁻², preferably from 35 gm⁻² to 50 gm⁻².

In a preferred embodiment, the flexible wrapper is paper coated with lacquer; wherein the lacquer behaves as a barrier against moisture, grease and water. The thickness of the flexible wrapper is from 48 to 58 µm and the lacquer is present in an amount of from 42 to 45 gm⁻².

The term 'bonded' means that two materials are attached for example by either by either adhesive lamination or extrusion lamination or coating.

Both lamination (adhesive and extrusion) and coating processes result in a layered structure of the inner material and one or more subsequent materials. For example, the laminated process results in an inner material on one surface of the wrapper, and a subsequent material on the opposed surface of the material, optionally bonded to or coated with a further subsequent material.

The invention further comprises an outer material. The outer material may be any of the subsequent materials of the flexible wrapper. Preferably, the outer material is a lacquer or a polymer material as defined above.

The term surface may be interchangeable with the term face.

A flexible wrapper wherein the wrapper material has a thickness of from 10 µm to 70 µm, preferably from 15 µm to 60 µm.

Flexible wrapper is intended to mean a flexible flow-wrapped wrapper as described and prepared in C. Clarke 'The Science of Ice Cream', RSC 2004, pages 100 - 102. A flexible wrapper is prepared by folding and sealing the flexible wrapper material in a flow wrap process, utilizing machines such as a: horizontal form-fill-seal machine, Jenkins and Harrington, Packaging Foods with Plastics, Technomic Publishing Co. Inc. A sealant may be present on the surface of the inner material positioned substantially where the seal is to be formed. Sealant materials may be selected from the group consisting of: patterned cold seal and patterned heat seal sealants, e.g.: liofol, available from Henkel. An example of a suitable pattern sealing process is described in WO2011/004156, page 12 lines 16-23.

A frozen confection that is wrapped in a flexible flow-wrap wrapper does not typically correspond closely in shape to the shape of the flexible flow-wrap wrapper, i.e. the wrapper is not closely aligned to the contours of the frozen confection, such as for example a wafer cone frozen confection wrapped in a conical wrapper, or a frozen confection that is shaped by the contours of the packaging itself. Flexible flow-wrap wrappers are typically rectangular (from a front perspective view) and may comprise any shape of frozen confection, such as a 'rocket lolly' which has a rocket shape (tapered in sections from the stick end of the frozen confection to the tip-end), or a tear-drop/oval shape, such as the 'Solero Exotic' frozen confection; or a rectangle that has rounded corners at one or both ends, or a conical shape with the smallest diameter of the cone at the tip end of the frozen confection, such as 'fruttare' products. All shapes are described as a 2-D view from the front perspective of the frozen confection or wrapper. Front perspective means the 2-D face of the frozen confection or flexible flow-wrapper with the greatest surface area. The flexible flow-wrap wrapper behaves as an envelope to enclose the frozen confection, rather than a wrapper that is designed to be closely aligned to the contours of the frozen confection. A flexible flow-wrap wrapper in the form of an envelope means that the frozen confection and any gaseous substance present are encased within the sealed or closed flexible flow-wrap wrapper.

Frozen confections within flexible flow-wrap wrappers are typically able to move in any direction within the flexible flow-wrap wrapper. The longest length of the frozen confection (excluding any stick present) is typically from 20 to 80% of the longest length of the flow-wrap wrapper of the frozen confection product. Preferably, from 25 to 75% of the longest length of the flow-wrap wrapper of the frozen confection product. More preferably, from 30 to 70% of the longest length of the flow-wrap wrapper of the frozen confection product. The longest length of the frozen confection and the longest length of the flexible flow-wrap wrapper are lengths measured in the same linear direction of the frozen confection product.

Frozen confection product means a frozen confection and a flexible wrapper. Preferably the wrapper is sealed or closed and comprises the frozen confection within the sealed or closed wrapper. Preferably the wrapper is a flow-wrap wrapper; i.e.: prepared by a flow-wrap process.

A method for the manufacture of a frozen confection product comprising a flexible
flow-wrap

wrapper and a frozen confection using a flexible packaging converting process comprising the steps of:
a Providing a flexible wrapper;
b Shaping the flexible wrapper of a. into a sleeve;
c Placing a frozen confection on the surface of the inner material of the sleeve of step b.
d Sealing or closing the sleeve of step c. wherein the frozen confection is present within the sealed or closed flexible wrapper material;
wherein the flexible wrapper is prepared from an inner material and one or more subsequent materials by a process selected from the group consisting of: adhesive lamination; extrusion lamination; extrusion coating; and coating of an inner material.

Frozen confection means: a sweet-tasting fabricated foodstuff intended for consumption in the frozen state (i.e. under conditions wherein the temperature of the foodstuff is less than 0 ° C, and preferably under conditions wherein the foodstuff comprises significant amounts of ice). The frozen confection composition is selected from the group consisting of water ice, milk-ice cream, water-ice cream, ice cream, frozen yoghurt, sorbet and mixtures thereof. Examples of frozen confection include: the 'Rocket Lolly', 'Solero Exotic', 'Mini Milk', 'Fruit Smoothie', 'Twister' and 'Mivvi/Split', available from Unilever®. An experimental method for preparing frozen water ices, such as the core of the Twister product is provided in C. Clarke 'The Science of Ice Cream' RSC 2004, pages 92 ('fill and suck' method) and 177 (ingredients and method).

The outer surface of the frozen confection comprises greater than 30% water, greater than 40% water, greater than 50% water, greater than 60% water, greater than 70% water. The outer surface of the frozen confection comprises at the most 80% water, at the most 90% water, at the most 95% water, at the most 99% water. The outer surface of the frozen confection comprises from 30 wt% to 99 wt% water, from 40 wt% to 95 wt% water, from 50 wt% to 90 wt% water, and from 60 wt% to 80wt % water.

Frost means moisture that accumulates on the surface of the frozen confection. The moisture may originate from the atmosphere surrounding the frozen confection or from migration of moisture from the body of the frozen confection towards and onto the surface of the frozen confection. Frost may be ice.

Use of a flexible wrapper according to the present invention for the storage of a frozen confection at about -18 °C. Use of a flexible wrapper according to the present invention for the storage of a frozen confection at about -20 °C.

Use of a flexible wrapper for the reduction of frost on a frozen confection surface, wherein the frost present on the surface of the frozen confection is from 2 wt% to 5 wt% after 3 weeks of storage at about -18 °C; from 2.25 wt% to 4 wt% after 3 weeks of storage at about -18 °C; from 2.5 wt% to 3 wt% after 3 weeks of storage at about -18 °C.

Use of a flexible wrapper for the reduction of frost on a frozen confection surface, wherein the frost present on the surface of the frozen confection is from 0 wt% to 10 wt% after 6 weeks of storage at about -18 °C; from 0 wt% to 7.5 wt% after 6 weeks of storage at about -18 °C; from 0 wt% to 5 wt% after 6 weeks of storage at about -18 °C; preferably form 0 wt% to 4 wt% after 6 weeks of storage at about -18 °C.

Use of a flexible wrapper for the reduction of frost on a frozen confection surface, wherein the frost present on the surface of the frozen confection is from 0 wt% to 15 wt% after 14 weeks of storage at about -18 °C; from 0 wt% to 13 wt% after 14 weeks of storage at about -18 °C; from 0 wt% to 11 wt% after 14 weeks of storage at about -18 °C; preferably from 0 wt% to 10 wt% after 14 weeks of storage at about -18 °C.

Use of a flexible wrapper wherein the frozen confection may be stored at about -18 °C for 6 months or greater, 9 months or greater, 12 months or greater, 18 months or greater, 24 months or greater and the percentage of frost present on the surface of the frozen confection is from 0 wt% to 50 wt% of the total frost present.

About -18 °C means the storage temperature of a commercial or domestic freezer. The storage temperature of a commercial or domestic freezer may vary from between -15 °C to -30 °C. It is also intended that 'about -18 °C' means the average storage temperature experienced by the frozen confection; for example, where fluctuation in temperature is experienced due to opening and shutting of freezer/storage unit doors or due to transportation of the frozen confection between distribution sites and points (centres) for sale of the frozen confections to customers.

Use of a flexible wrapper for the reduction of frost on a frozen confection surface, wherein the percentage of frost present on the surface of the frozen confection is from 0 wt% to 5 wt% after 3 weeks of storage at about -20 °C; from 0 wt% to 4 wt% after 3 weeks of storage at about -20 °C; from 0 wt% to 3 wt% after 3 weeks of storage at about -20 °C; wherein the temperature of storage may fluctuate by up to about 2 °C.

Use of a flexible wrapper for the reduction of frost on a frozen confection surface, wherein the percentage of frost present on the surface of the frozen confection is from 0 wt% to 10 wt% after 6 weeks of storage at about -20 °C; from 0 wt% to 7.5 wt% after 6 weeks of storage at about -20 °C; from 0 wt% to 5 wt% after 6 weeks of storage at about -20 °C; preferably form 0 wt% to 4 wt% after 6 weeks of storage at about -20 °C; wherein the temperature of storage may fluctuate by up to about 2 °C.

Use of a flexible wrapper for the reduction of frost on a frozen confection surface, wherein the percentage of frost present on the surface of the frozen confection is from 0 wt% to 15 wt% after 14 weeks of storage at about -20 °C; from 0 wt% to 13 wt% after 14 weeks of storage at about -20 °C; from 0 wt% to 11 wt% after 14 weeks of storage at about -20 °C; preferably from 0 wt% to 10 wt% after 14 weeks of storage at about -20 °C; wherein the temperature of storage may fluctuate by up to about 2 °C.

Total frost present means the amount of the frost present on the surface of the frozen confection and the frost present on the flexible wrapper. Total frost present means the amount of frost present within the sealed flexible wrapper comprising a frozen confection.

### Examples

### General Experimental Method:

Frozen confections (Rocket Lolly, average weight 56.5 g, Unilever ®) were removed from a Visimax freezer that was maintained at about -20°C. The packaging was removed and any surface frost was removed mechanically by scraping. Surface frost was identified as being clear frozen water, free of any colour attached to the surface of the coloured frozen confection.

The frozen confections were then placed in a pre-weighed flexible packaging wrapper and sealed using a horizontal form fill seal machine at room temperature to obtain frozen confection products. The frozen confection products were stored in a Visimax freezer according to the conditions provided in Examples 1-18.

After storage, the frozen confection products were removed from the Visimax freezer. The frozen confection was weighed and the wrapper was then opened at the stick end and the confection was removed. The empty wrapper and the frost contained within were weighed. The visible colourless frost was then mechanically removed from the surface of the frozen confection by scraping. The frost scraped from the surface of the frozen confection and the frozen confection after scraping were weighed independently.

### Examples 1-6:

The general experimental method was followed. The frozen confection products were stored for a duration of 3, 6 and 14 weeks at a constant temperature of about -20 °C with a temperature fluctuation of up to about 2 °C. The frozen confection flexible wrapper used was a paper-polypropylene flexible wrapper with a thickness of 63 µm +/-2 µm.

### Examples 7-12:

The general experimental method was followed. The frozen confection products were stored for a duration of 3, 6 and 14 weeks at a temperature of about -18 °C with a fluctuation of the temperature between 15 °C and -30 °C for short periods, mimicking the storage of frozen confection products in storage facilities at points of sale of the frozen confections to customers. The frozen confection flexible wrapper used was a paper-polypropylene flexible wrapper with a thickness of 63 µm +/- 2 µm.

### Example 13-18 (Comparative Example):

The general experimental method was followed. The frozen confection products were stored for a duration of 3, 6 and 14 weeks at a temperature of about -18 °C with a fluctuation of the temperature between 15 °C and -30 °C for short periods, mimicking the storage of frozen confection products in storage facilities at points of sale of the frozen confections to customers. The frozen confection flexible wrapper used was a BOPP flexible wrapper with a thickness of 33 µm.

### Examples 19-21:

The general experimental method was followed. The frozen confection products were stored for a duration of 3, 6 and 14 weeks at a constant temperature of about -18 °C with a temperature fluctuation of up to about 2 °C. The frozen confection flexible wrapper used was a paper-lacquer flexible wrapper. The thickness of the flexible wrapper is from 48 to 58 µm and the lacquer is present in an amount of from 42 to 45 gm⁻².

### Example 13-18 (Comparative Example):

The general experimental method was followed. The frozen confection products were stored for a duration of 3, 6 and 14 weeks at a constant temperature of about -18 °C with a temperature fluctuation of up to about 2 °C. The frozen confection flexible wrapper used was a BOPP flexible wrapper with a thickness of 33 µm.

**Table 1a: Percentage frost on frozen confection surface contained in paper-polypropylene flexible wrappers stored at -20 °C over 3, 6 and 14 weeks (Examples 1-6):**

| **Example** | **Storage (weeks)** | **Wrapper (g, dry)** | **Wrapper + Frozen confection after storage (g)** | **Weight of frost on wrapper (g)** | **Weight of frost scraped from frozen confection (g)** | **Total frost on wrapper and scraped from frozen confection (g)** | **% total frost present in wrapper** | **% frost present on surface of frozen confection** |
|---|---|---|---|---|---|---|---|---|
| 1 | 3 | 2.70 | 58.36 | 0.71 | 0.07 | 0.78 | 91.0 | 9.0 |
| 2 | 3 | 2.60 | 61.14 | 1.20 | 0.13 | 1.33 | 90.2 | 9.8 |
| 3 | 6 | 2.60 | 59.62 | 1.23 | 0.12 | 1.35 | 91.1 | 8.9 |
| 4 | 6 | 2.70 | 62.14 | 1.22 | 0.16 | 1.38 | 88.4 | 11.6 |
| 5 | 14 | 2.60 | 54.70 | 2.98 | 0.10 | 3.08 | 96.8 | 3.2 |
| 6 | 14 | 2.70 | 58.68 | 1.47 | 0.11 | 1.58 | 93.0 | 7.0 |

Table 1a illustrates that the total frost present in the wrapper and on the frozen confection increases slightly over time during storage. The total weight of frost present after 3 weeks of storage was 0.78 and 1.33 g; 1.35 and 1.38 g after 6 weeks; and 3.08 and 1.58 g after 14 weeks. The percentage of the total frost that is present on the surface of the frozen confection is approximately consistent for examples 1-4 and 6 (between 7.0 % and 11.6 %).

**Table 1b: Average weight of percentage frost on frozen confection surface contained in paper-polypropylene flexible wrapper stored at -20 °C over 3, 6 and 14 weeks (Examples 1-6):**

| **Example** | **Storage (weeks)** | **Average Weight of frost in wrapper (g)** | **Standard Deviation** | **Average Weight of frost scraped from frozen confection (g)** | **Standard Deviation** | **Total weight of frost (g)** | **% frost present on surface of frozen confection** |
|---|---|---|---|---|---|---|---|
| 1 | 3 | 0.95 | 0.35 | 0.10 | 0.04 | 1.05 | 9.5 |
| 2 | 3 | | | | | | |
| 3 | 6 | 1.23 | 0.01 | 0.14 | 0.03 | 1.37 | 10.2 |
| 4 | 6 | | | | | | |
| 5 | 14 | 2.23 | 1.07 | 0.11 | 0.01 | 2.34 | 4.7 |
| 6 | 14 | | | | | | |

The average weight of frost present on the wrapper increased from 0.95 g to 1.23 g and 2.23 g on storage duration for 3, 6 and 14 weeks respectively. In comparison, for the same storage duration, the average weight of frost on the surface of the frozen confection remained approximately the same (0.10 g, 0.14 g and 0.11 g).

The percentage of the total frost that is present on the surface of the frozen confection after 3, 6 and 14 weeks of storage was 9.5 %, 10.2 % and 4.7 %. The percentage of the total frost present on the surface of the frozen confection for Examples 1-4 was approximately consistent.

**Table 2a: Percentage frost on frozen confection surface contained in paper-polypropylene flexible wrapper stored at -18 °C over 3, 6 and 14 weeks (Examples 7-12).**

| **Sample** | **Storage (weeks)** | **Wrapper (g, dry)** | **Wrapper + Frozen confection after storage (g)** | **Weight of frost on wrapper (g)** | **Weight of frost scraped from frozen confection (g)** | **Total frost on wrapper and scraped from frozen confection (g)** | **% total frost present in wrapper** | **% frost present on surface of frozen confection** |
|---|---|---|---|---|---|---|---|---|
| 7 | 3 | 2.60 | 58.25 | 4.91 | 0.16 | 5.07 | 96.8 | 3.2 |
| 8 | 3 | 2.60 | 58.04 | 3.18 | 0.05 | 3.23 | 98.5 | 1.5 |
| 9 | 6 | 2.70 | 58.85 | 6.48 | 0.32 | 6.80 | 95.3 | 4.7 |
| 10 | 6 | 2.70 | 61.46 | 5.23 | 0.09 | 5.32 | 98.3 | 1.7 |
| 11 | 14 | 2.70 | 59.78 | 9.33 | 0.28 | 9.62 | 97.0 | 3.0 |
| 12 | 14 | 2.70 | 58.90 | 9.43 | 1.80 | 11.23 | 84.0 | 16.0 |

In correspondence with Table 1a, Table 2a illustrates that the presence of total frost increases over time during storage; however, the increase observed in Table 2a is greater than the values in Table 1a. The observed greater increase in total frost would appear to correspond to the greater fluctuation in storage temperature experienced by Examples 7-12 when compared to Examples 1-6. The total weight of frost present after 3 weeks of storage was 5.07 g and 3.23 g and increased to 9.62 g and 11.23 g after 14 weeks.

**Table 2b: Average weight of percentage frost on frozen confection surface contained in paper-polypropylene flexible wrapper stored at -18 °C over 3, 6 and 14 weeks (Examples 7-12).**

| **Example** | **Storage (weeks)** | **Average Weight of frost in wrapper (g)** | **Standard Deviation** | **Average Weight of frost scraped from frozen confection (g)** | **Standard Deviation** | **Total weight of frost (g)** | **% frost present on surface of frozen confection** |
|---|---|---|---|---|---|---|---|
| 7 | 3 | 4.05 | 1.22 | 0.11 | 0.08 | 4.16 | 2.6 |
| 8 | 3 | | | | | | |
| 9 | 6 | 5.86 | 0.88 | 0.21 | 0.16 | 6.07 | 3.5 |
| 10 | 6 | | | | | | |
| 11 | 14 | 9.38 | 0.07 | 1.04 | 1.07 | 10.42 | 10.0 |
| 12 | 14 | | | | | | |

In correspondence with Table 1b, Table 2b illustrates that the average weight of frost present on the wrapper increases from 4.05 g to 5.86 g and 9.38 g for a storage duration of 3, 6 and 14 weeks respectively.

In contrast to Table 1b, Table 2b illustrates the average weight of frost on the surface of the frozen confection increases from 0.11 to 0.21 and 1.04 for a storage duration of 3, 6 and 14 weeks respectively.

The percentage of the total frost that is present on the surface of the frozen confection increases after a storage duration of 3, 6 and 14 weeks from 2.6 % to 3.5 % and 10.0 % of the total frost present in the frozen confection product.

**Table 3a: Percentage frost on frozen confection surface contained in a BOPP flexible wrapper stored at -18 °C over 3, 6 and 14 weeks (Examples 13-18).**

| **Sample** | **Storage (weeks)** | **Wrapper (g, dry)** | **Wrapper + Frozen confection after storage (g)** | **Weight of frost on wrapper (g)** | **Weight of frost scraped from frozen confection (g)** | **Total frost on wrapper and scraped from frozen confection (g)** | **% total frost present in wrapper** | **% frost present on surface of frozen confection** |
|---|---|---|---|---|---|---|---|---|
| 13 | 3 | 0.80 | 58.80 | 6.10 | 0.10 | 6.20 | 98.4 | 1.6 |
| 14 | 3 | 0.80 | 55.40 | 4.10 | 0.30 | 4.40 | 93.0 | 7.0 |
| 15 | 6 | 0.70 | 53.80 | 3.60 | 3.30 | 6.90 | 52.0 | 48.0 |
| 16 | 6 | 1.00 | 56.00 | 4.90 | 4.30 | 9.20 | 53.0 | 47.0 |
| 17 | 14 | 0.90 | 56.50 | 1.70 | 7.80 | 9.50 | 17.9 | 82.1 |
| 18 | 14 | 0.80 | 54.10 | 1.70 | 8.80 | 10.50 | 16.2 | 83.8 |

In correspondence with Tables 1a and 2a, Table 3a illustrates that the presence of total frost increases over time during storage. Similarly to Table 2a, the total weight of frost present after 3 weeks of storage was 6.20 and 4.40 g and increased to 9.50 g and 10.50 g after 14 weeks.

Table 3a illustrates that the percentage of the total frost present on the surface of the frozen confection significantly increases from 1.6 and 7.0 wt% to 82.1 and 83.8 wt% with increase in storage duration from 3 to 14 weeks. The increase in the percentage of the frost present on the surface of the frozen confection for Examples 13-18 is much greater (83.1 % after 14 weeks) in comparison to the Examples 7-12 (16.0 % after 14 weeks).

**Table 3b: Average Weight Average weight of percentage frost on frozen confection surface contained in a BOPP flexible wrapper stored at -18 °C over 3, 6 and 14 weeks (Examples 13-18).**

| **Sample** | **Storage (weeks)** | **Average Weight of frost in wrapper (g)** | **Standard Deviation** | **Average Weight of frost scraped from frozen confection (g)** | **Standard Deviation** | **Total weight of frost (g)** | **% frost present on surface of frozen confection** |
|---|---|---|---|---|---|---|---|
| 13 | 3 | 5.10 | 1.41 | 0.20 | 0.14 | 5.3 | 3.8 |
| 14 | 3 | | | | | | |
| 15 | 6 | 4.25 | 0.92 | 3.80 | 0.71 | 8.05 | 47.2 |
| 16 | 6 | | | | | | |
| 17 | 14 | 1.70 | 0.00 | 8.30 | 0.71 | 10 | 83.0 |
| 18 | 14 | | | | | | |

In contrast to Examples 1-12, (Tables 1b and 2b), Examples 13-18 (Table 3b) illustrate that the average weight of frost present on the surface of the frozen confection significantly increases from 0.20 g to 3.80 g and 8.30 g for a storage duration of 3, 6 and 14 weeks, respectively. This increase corresponds to a percentage increase of frost on the surface of a frozen confection of from 3.8 % to 47.2 % and 83.0 % for a storage duration of 3, 6 and 14 weeks, respectively.

**Table 4: Percentage frost on frozen confection surface contained in paper-lacquer flexible wrappers stored at -18 °C over 3, 6 and 14 weeks (Examples 1-6):**

| **Example** | **Storage (weeks)** | **Weight of frost on wrapper (g)** | **Weight of frost scraped from frozen confection (g)** | **Total frost on wrapper and scraped from frozen confection (g)** | **% total frost present in wrapper** | **% frost present on surface of frozen confection** |
|---|---|---|---|---|---|---|
| 19 | 3 | 5.0 | 0.2 | 5.2 | 96.2 | 3.8 |
| 20 | 6 | 5.5 | 0.7 | 6.2 | 88.7 | 11.3 |
| 21 | 14 | 9.0 | 0.7 | 9.7 | 92.8 | 7.2 |

Table 4 illustrates that the total frost present in the paper-lacquer flexible wrapper and on the frozen confection increases over time during storage from 5.2 g to 6.2 g and 9.7 g. The percentage of the frost present on the frozen confection (3.8 %, 11.3 % and 7.2 %) is significantly less than the frost present in the flexible wrapper (96.2 %, 88.7 % and 92.8 %).

**Table 5: Percentage frost on frozen confection surface contained in paper-BOPP flexible wrappers stored at -18 °C over 3, 6 and 14 weeks (Examples 1-6):**

| **Example** | **Storage (weeks)** | **Weight of frost on wrapper (g)** | **Weight of frost scraped from frozen confection (g)** | **Total frost on wrapper and scraped from frozen confection (g)** | **% total frost present in wrapper** | **% frost present on surface of frozen confection** |
|---|---|---|---|---|---|---|
| 22 | 3 | 4.9 | 0.2 | 5.1 | 96.1 | 3.9 |
| 23 | 6 | 4.1 | 3.5 | 7.6 | 53.9 | 46.1 |
| 24 | 14 | 3.6 | 8.3 | 11.9 | 30.3 | 69.7 |

Table 5 illustrates that the total frost present in the flexible wrapper and on the frozen confection increases over time during storage from 5.2 g to 7.6 g and 11.9 g. The percentage of the frost present on the frozen confection (3.9 %, 46.1 % and 69.7%) is significantly greater upon storage than the frost present in the flexible wrapper (96.1 %, 53.9 % and 69.7 %). Additionally, the amount of frost present on the frozen confection with the BOPP flexible wrapper (3.9 %, 46.1 % and 69.7%) is significantly greater upon storage than the frost present on the frozen confection with the paper-lacauer flexible wrappers (3.8 %, 11.3 % and 7.2 %).

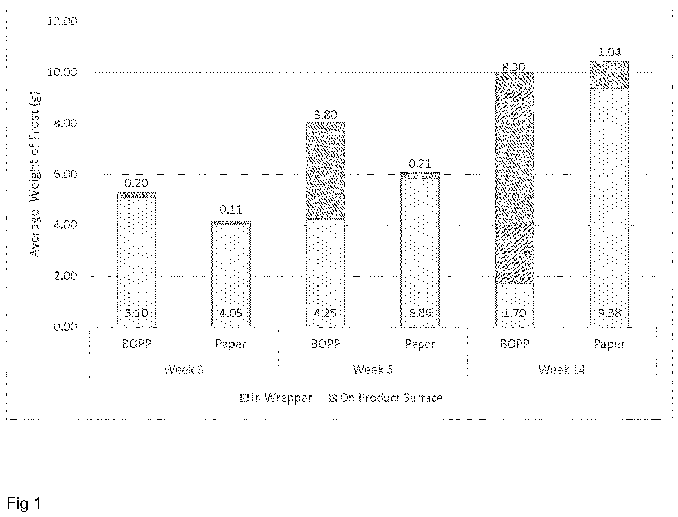

Figure 1 illustrates the average frost present on the surface of a frozen confection (labelled: 'on product surface') or in the wrapper (labelled: 'in wrapper') over time for Examples 7-12 (paper-polypropylene flexible wrapper) and Examples 13-18 (BOPP flexible wrapper). It can be seen that the weight of frost present on the surface of the frozen confection is significantly less for the frozen confection contained in the paper-polypropylene (Paper) flexible wrapper (Examples 7-12), compared to the frozen confection contained in the polymer-only flexible wrapper (BOPP) (Examples 13-18).

Figure 1 illustrates that the average percentage of frost present on the surface of the frozen confection over time during storage in a paper-polypropylene (Paper) flexible wrapper increases from 2.6% to 3.5 % and 10%. This increase is in striking contrast to the equivalent amount of frost present on the surface of the frozen confection when the frozen confection is stored in a polymer only (BOPP) flexible wrapper. The percentage of the total frost on the surface of the frozen confection over time during storage in a polymer only (BOPP) flexible wrapper increases from 3.8% to 47.2 % and 83%.

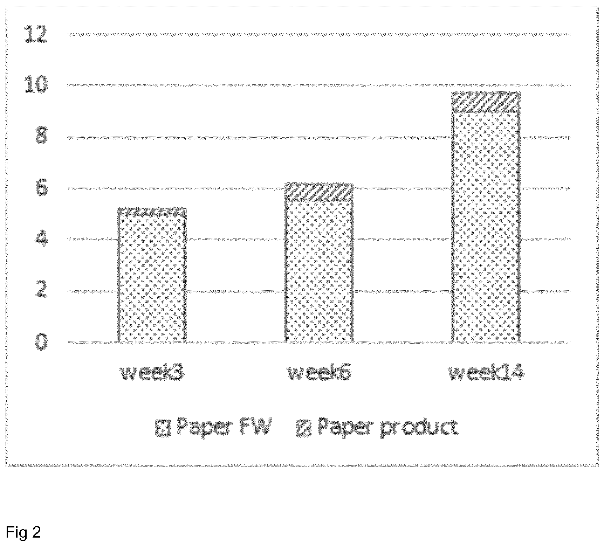

Figure 2: illustrates the frost present on the surface of a frozen confection (labelled: Paper Product') or in the wrapper (labelled: 'Paper FW') over time for Examples 19-21 (paper-lacquer flexible wrapper). It can be seen that the weight of frost present on the surface of the frozen confection is significantly less than the weight of frost present on the wrapper.

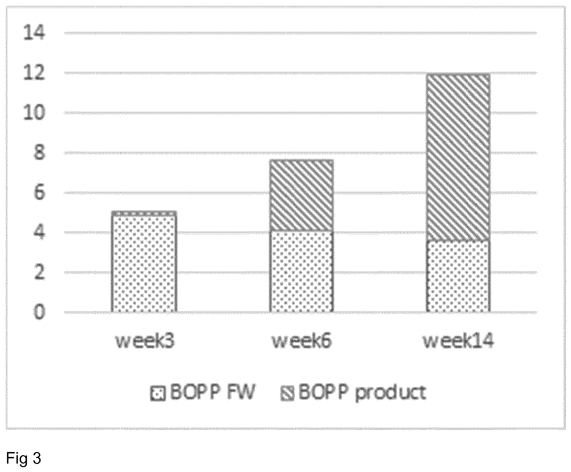

Figure 3: illustrates the frost present on the surface of a frozen confection (labelled: 'BOPP Product') or in the wrapper (labelled: 'BOPP FW') over time for Examples 22-24 (BOPP flexible wrapper). It can be seen that the weight of frost present on the surface of the frozen confection is significantly more with storage duration than the weight of frost present on the wrapper.

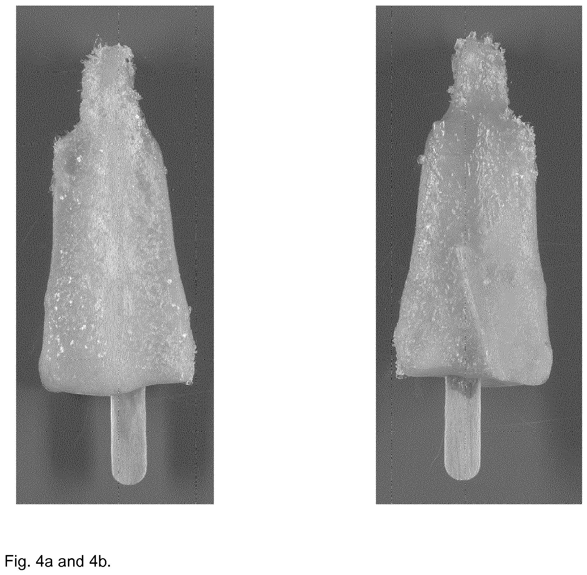

Figures 4a and 4b: Example 11: front and rear view, respectively.

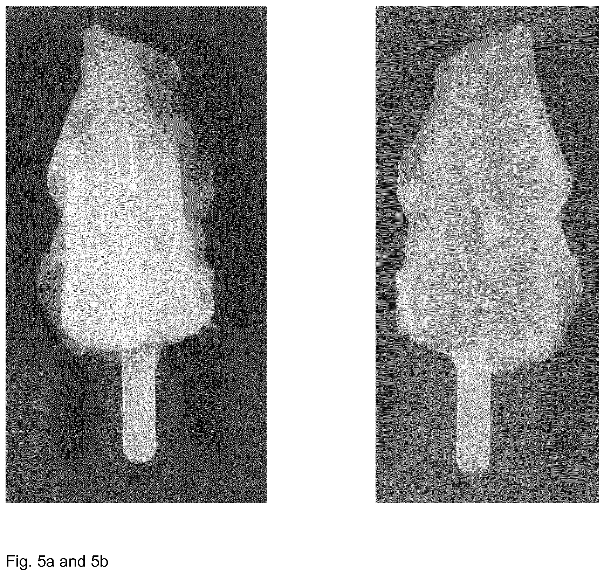

Figures 5a and 5b: Example 17: front and rear view, respectively.

## Claims

1. A frozen confection product comprising a frozen confection and a flexible flow-wrap wrapper, wherein the flexible flow-wrap wrapper comprises an inner material and at least one subsequent material, wherein the inner material has a water vapour transmission rate of at least 300 gm⁻² per 24 hr, the subsequent material has a water vapour transmission rate of at most 300 gm⁻² per 24 hr; wherein water vapour transmission rate is measured according to test method: ASTM 1249-13 at 38 °C and 90% humidity, the frozen confection is adjacent to the inner material and the flexible flow-wrap wrapper is closed or sealed.

2. A frozen confection product according to claim 1, wherein the inner material comprises a cellulose material with a weight of from 60 to 120 gm⁻².

3. A frozen confection product according to claim 1 or 2, wherein the inner material is a cellulose material selected from the group consisting of paper.

4. A frozen confection product according to any one of claims 1 to 3, wherein one subsequent material is selected from the group consisting of a polymer material, one or more metals, a coating material, lacquer and clay.

5. A frozen confection product according to claims 1 to 4, wherein the subsequent material is a polymer material selected from the group consisting of polypropylene, polyethylene and polyethylene terephthalate.

6. A frozen confection product according to claims 1 to 5, wherein the flexible wrapper is a material selected from the group consisting of laminated polypropylene-paper, laminated polyethylene-paper and laminated polyethylene terephthalate-paper.

7. A frozen confection product according to any one of claims 4 to 6, wherein the subsequent material that is a coating material is in contact with the inner material and a second subsequent material.

8. A frozen confection product according to any one of claims 1 to 7, wherein the flexible flow-wrap wrapper has a thickness of from 10 µm to 70 µm.

9. A frozen confection product according to any one of claims 1 to 8, wherein the frozen confection composition is selected from the group consisting of water ice, milk-ice cream, water-ice cream, ice cream, frozen yoghurt, sorbet and mixtures thereof.

10. A frozen confection product according to any one of claims 1 to 9, wherein the outer surface of the frozen confection comprises from 30 wt% to 99 wt% water.

11. A method for the manufacture of a frozen confection product comprising a flexible flow-wrap wrapper and a frozen confection according to claims 1 to 10 comprising the steps of:
a Providing a flexible wrapper;
b Shaping the flexible wrapper of a. into a sleeve;
c Placing a frozen confection on the surface of the inner material of the sleeve of step b.; and
d Sealing or closing the sleeve of step c. wherein the frozen confection is present within the sealed or closed flexible wrapper material;
wherein the flexible wrapper is prepared by a process selected from the group consisting of: adhesive lamination; extrusion lamination; extrusion coating; and coating of an inner material.

## Patentansprüche

1. Gefrorenes Konfektprodukt, umfassend ein gefrorenes Konfekt und eine flexible Flow-Wrap-Verpackung, wobei die flexible Flow-Wrap-Verpackung ein inneres Material und mindestens ein nachfolgendes Material umfasst, wobei das innere Material eine Wasserdampfdurchlässigkeit von mindestens 300 gm⁻² pro 24 h aufweist, das nachfolgende Material eine Wasserdampfdurchlässigkeit von höchstens 300 gm⁻² pro 24 h aufweist; wobei die Wasserdampfdurchlässigkeit gemäß dem Testverfahren: ASTM 1249-13 bei 38 °C und 90% Luftfeuchtigkeit gemessen wird, wobei das gefrorene Konfekt dem inneren Material benachbart ist und die flexible Flow-Wrap-Verpackung geschlossen oder versiegelt ist.

2. Gefrorenes Konfektprodukt nach Anspruch 1, wobei das innere Material ein Cellulosematerial mit einem Gewicht von 60 bis 120 gm⁻² umfasst.

3. Gefrorenes Konfektprodukt nach Anspruch 1 oder 2, wobei das innere Material ein Cellulosematerial ist, das aus der Gruppe bestehend aus Papier ausgewählt ist.

4. Gefrorenes Konfektprodukt nach irgendeinem der Ansprüche 1 bis 3, wobei ein nachfolgendes Material ausgewählt ist aus der Gruppe bestehend aus einem Polymermaterial, einem oder mehreren Metallen, einem Beschichtungsmaterial, Lack und Ton.

5. Gefrorenes Konfektprodukt nach den Ansprüchen 1 bis 4, wobei das nachfolgende Material ein Polymermaterial ist, das aus der Gruppe bestehend aus Polypropylen, Polyethylen und Polyethylenterephthalat ausgewählt ist.

6. Gefrorenes Konfektprodukt nach den Ansprüchen 1 bis 5, wobei die flexible Verpackung ein Material ist, das aus der Gruppe ausgewählt ist, die aus laminiertem Polypropylen-Papier, laminiertem Polyethylen-Papier und laminiertem Polyethylenterephthalat-Papier besteht.

7. Gefrorenes Konfektprodukt nach irgendeinem der Ansprüche 4 bis 6, wobei das nachfolgende Material, das ein Beschichtungsmaterial ist, mit dem inneren Material und einem zweiten nachfolgenden Material in Kontakt steht.

8. Gefrorenes Konfektprodukt nach irgendeinem der Ansprüche 1 bis 7, wobei die flexible Flow-Wrap-Verpackung eine Dicke von 10 µm bis 70 µm aufweist.

9. Gefrorenes Konfektprodukt nach irgendeinem der Ansprüche 1 bis 8, wobei die gefrorene Konfektzusammensetzung ausgewählt ist aus der Gruppe bestehend aus Wassereis, Milcheiscreme, Wassereiscreme, Eiscreme, gefrorenem Joghurt, Sorbet und Gemischen davon.

10. Gefrorenes Konfektprodukt nach irgendeinem der Ansprüche 1 bis 9, wobei die Außenfläche des gefrorenen Konfekts 30 Gew.-% bis 99 Gew.-% Wasser umfasst.

11. Verfahren zur Herstellung eines gefrorenen Konfektprodukts, umfassend eine flexible Flow-Wrap-Verpackung und ein gefrorenes Konfekt gemäß den Ansprüchen 1 bis 10, umfassend die folgenden Schritte:
a Bereitstellen einer flexiblen Verpackung;
b Formen der flexiblen Verpackung von a. in einen Schlauch;
c Platzieren eines gefrorenen Konfekts auf die Oberfläche des inneren Materials des Schlauchs von Schritt b.; und
d Versiegeln oder Verschließen des Schlauchs von Schritt c., wobei das gefrorene Konfekt innerhalb des versiegelten oder verschlossenen flexiblen Verpackungsmaterials vorliegt;
wobei die flexible Verpackung durch ein Verfahren hergestellt wird, das aus der Gruppe ausgewählt ist, die aus: Klebstoffkaschierung; Extrusionslaminierung; Extrusionsbeschichtung; und Beschichten eines inneren Materials besteht.

## Revendications

1. Produit de confiserie glacée comprenant une confiserie glacée et un emballage d'enveloppe tubulaire flexible, dans lequel l'emballage d'enveloppe tubulaire flexible comprend un matériau interne et au moins un matériau subséquent, dans lequel le matériau interne présente une vitesse de transmission de vapeur d'eau d'au moins 300 gm⁻² par 24 h, le matériau subséquent présente une vitesse de transmission de vapeur d'eau d'au plus 300 gm⁻² par 24 h ; dans lequel la vitesse de transmission de vapeur d'eau est mesurée selon le procédé de test : ASTM 1249-13 à 38°C et 90 % d'humidité, la confiserie glacée est adjacente au matériau interne et l'emballage d'enveloppe tubulaire flexible est fermé ou scellé.

2. Produit de confiserie glacée selon la revendication 1, dans lequel le matériau interne comprend un matériau de cellulose avec une masse de 60 à 120 gm⁻².

3. Produit de confiserie glacée selon la revendication 1 ou 2, dans lequel le matériau interne est un matériau de cellulose choisi dans le groupe consistant en papier.

4. Produit de confiserie glacée selon l'une quelconque des revendications 1 à 3, dans lequel un matériau subséquent est choisi dans le groupe consistant en un matériau polymère, un ou plusieurs métaux, un matériau de revêtement, une laque et de l'argile.

5. Produit de confiserie glacée selon les revendications 1 à 4, dans lequel le matériau subséquent est un matériau polymère choisi dans le groupe consistant en polypropylène, polyéthylène et poly(éthylène téréphtalate).

6. Produit de confiserie glacée selon les revendications 1 à 5, dans lequel l'emballage flexible est un matériau choisi dans le groupe consistant en polypropylène-papier stratifié, polyéthylène-papier stratifié et poly(éthylène téréphtalate)-papier stratifié.

7. Produit de confiserie glacée selon l'une quelconque des revendications 4 à 6, dans lequel le matériau subséquent qui est un matériau de revêtement est en contact avec le matériau interne et un second matériau subséquent.

8. Produit de confiserie glacée selon l'une quelconque des revendications 1 à 7, dans lequel l'emballage d'enveloppe tubulaire flexible présente une épaisseur de 10 µm à 70 µm.

9. Produit de confiserie glacée selon l'une quelconque des revendications 1 à 8, dans lequel la composition de confiserie glacée est choisie dans le groupe consistant en une glace à l'eau, une crème glacée au lait, une crème glacée à l'eau, une crème glacée, du yoghourt glacé, du sorbet et des mélanges de ceux-ci.

10. Produit de confiserie glacée selon l'une quelconque des revendications 1 à 9, dans lequel la surface externe de la confiserie glacée comprend de 30 % en masse à 99 % en masse d'eau.

11. Procédé pour la fabrication d'un produit de confiserie glacée comprenant un emballage d'enveloppe tubulaire flexible et une confiserie glacée selon les revendications 1 à 10 comprenant les étapes de :
a fourniture d'un emballage flexible ;
b mise en forme de l'emballage flexible de a. en une gaine ;
c disposition d'une confiserie glacée sur la surface du matériau interne de la gaine de l'étape b. ; et
d scellement ou fermeture de la gaine de l'étape c. dans lequel la confiserie glacée est présente à l'intérieur du matériau d'emballage flexible scellé ou fermé ;
dans lequel l'emballage flexible est préparé par un procédé choisi dans le groupe consistant en : stratification adhésive ; stratification par extrusion ; revêtement par extrusion ; et revêtement d'un matériau interne.
